# EUROPEAN PATENT APPLICATION

(11) **EP 2 503 659 A1**
(43) Date of publication of application: **26.09.2012**
(21) Application number: 12159674.6
(22) Date of filing: 15.03.2012
(51) Int. Cl.: H02J 3/14

(54) **Systems and methods for managing an energy distribution network**

(30) Priority: 21.03.2011 US 201113052332
(71) Applicant: General Electric Company, Schenectady, NY 12345 (US)
(72) Inventor: Littrell, Nathan Bowman, Minden, NV Nevada 89423 (US)
(74) Representative: Picker, Madeline Margaret

(57) **Abstract**

A system (100) includes a first computer (118) including an energy distribution network model (300). The first computer identifies a plurality of energy consumers (106) associated with an energy distribution constraint within the energy distribution network (200). The system also includes a second computer configured to receive data from the first computer. The second computer is also configured to identify a plurality of customers subscribed to a demand response program and identify a subset of the plurality of energy consumers that are associated with the plurality of customers. The second computer is further configured to identify a device (104) associated with each energy consumer of the subset of energy consumers and cause a demand response request to be transmitted to at least one identified device.

## Description

### BACKGROUND OF THE INVENTION

The present application relates generally to energy systems and, more particularly, to systems and methods for managing an energy distribution network.

Demand for electricity by customers generally varies over the course of any particular day. Such demand also generally varies by season (e.g., demand for electricity may be higher during the hot summer months as compared to the demand in the more mild spring months). Such demand may also grow over time in a particular market as the population and/or industry grows. Increasing electricity generation capacity can be capital intensive and take many years of planning and construction.

Rather than undertake such significant capital investments, planning and construction, some utilities impose a rate structure that discourages use of electricity during peak demand periods. For example, a utility customer who subscribes to such a rate structure agrees to reduced energy consumption during such peak demand periods and in return, receives a favorable rate. In the context of a residential application, for example, this means that during peak demand periods, the utility may choose to not supply electricity to the residential hot water heater. The hot water heater is energized during off peak periods. Such rate structures also are available in commercial applications and may relate to many different types of equipment that consume energy.

Some electric utility companies utilize so-called "smart grid" or Advanced Metering Infrastructure (AMI) power networks. Using an AMI network, a utility company may communicate with individual loads within a customer's premises and selectively reduce energy supplied during peak usage periods. As such, the utility company may reduce energy supplied to low priority loads (e.g., a hot water heater), while maintaining energy supplied to high priority loads (e.g., a freezer).

In addition, some utilities employ a demand response system that facilitates managing energy supply during periods of reduced power generation capacity and/or reduced power distribution capacity. Such situations may develop, for example, in the event a power generation source is taken off the energy distribution grid for servicing. In such situations, the demand response systems transmit demand response requests to a dashboard or another device (e.g., a switch) associated with at least one load at a customer's premises. The demand response requests cause the connected loads to be taken off the grid (e.g., the switch is opened so that no energy is supplied to such loads) during the period of reduced power generation capacity and/or reduced power distribution capacity.

At least some known power utility companies broadcast demand response requests to a plurality of dashboards or other devices associated with loads coupled to the power distribution network. Such broadcasted demand response requests may not necessarily reduce energy consumption in the specific portions of the power distribution network that experience reduced power distribution and/or transmission capacity.

By managing energy consumption during such peak demand periods as well as periods of reduced power generation/distribution capacity as described above, a utility may avoid making the significant capital investments required to construct and operate additional power generation facilities. Over time, of course, new power generation facilities may be needed in the event demand continues to grow and exceed capacity. In addition, while some utility customers may be willing to subscribe to a rate structure that enables the utility to disconnect energy supply to certain appliances/equipment during peak periods, such rate structures are not necessarily satisfactory.

### BRIEF DESCRIPTION OF THE INVENTION

In one embodiment, a system is provided that includes a first computer including an energy distribution network model. The first computer identifies a plurality of energy consumers associated with an energy distribution constraint within the energy distribution network. The system also includes a second computer configured to receive data from the first computer. The second computer is also configured to identify a plurality of customers subscribed to a demand response program and identify a subset of the plurality of energy consumers that are associated with the plurality of customers. The second computer is further configured to identify a device associated with each energy consumer of the subset of energy consumers and cause a demand response request to be transmitted to at least one identified device.

In another embodiment, a method is provided for managing an energy distribution network that distributes energy to a plurality of energy consumers. The method includes identifying a plurality of energy consumers associated with an energy distribution network constraint, identifying a plurality of customers subscribed to a demand response program, and identifying a subset of the plurality of energy consumers that are associated with the plurality of customers. A device associated with each energy consumer of the subset of energy consumers is identified and a demand response request is transmitted to at least one identified device.

In yet another embodiment, a demand response system is provided that includes a processor configured to receive data from an energy distribution network model, wherein the data identifies a plurality of energy consumers associated with an energy distribution constraint within the energy distribution network. The processor is also configured to identify a plurality of customers subscribed to a demand response program and identify a subset of the plurality of energy consumers that are associated with the plurality of customers. Moreover, the processor is further configured to identify a device associated with each energy consumer of the subset of energy consumers, and cause a demand response request to be transmitted to at least one identified device.

### BRIEF DESCRIPTION OF THE DRAWINGS

Fig. 1 is a block diagram of an example system for use with a utility company.
Fig. 2 is a schematic diagram of a portion of an example energy distribution network that may be used with the system shown in Fig. 1.
Fig. 3 is a block diagram of an example network model that may be used with the system shown in Fig. 1 and/or with the energy distribution network shown in Fig. 2.
Fig. 4 is a flow diagram of an example method for managing an energy distribution network that may be used with the system shown in Fig. 1 and/or the energy distribution network shown in Fig. 2.

### DETAILED DESCRIPTION OF EMBODIMENTS OF THE INVENTION

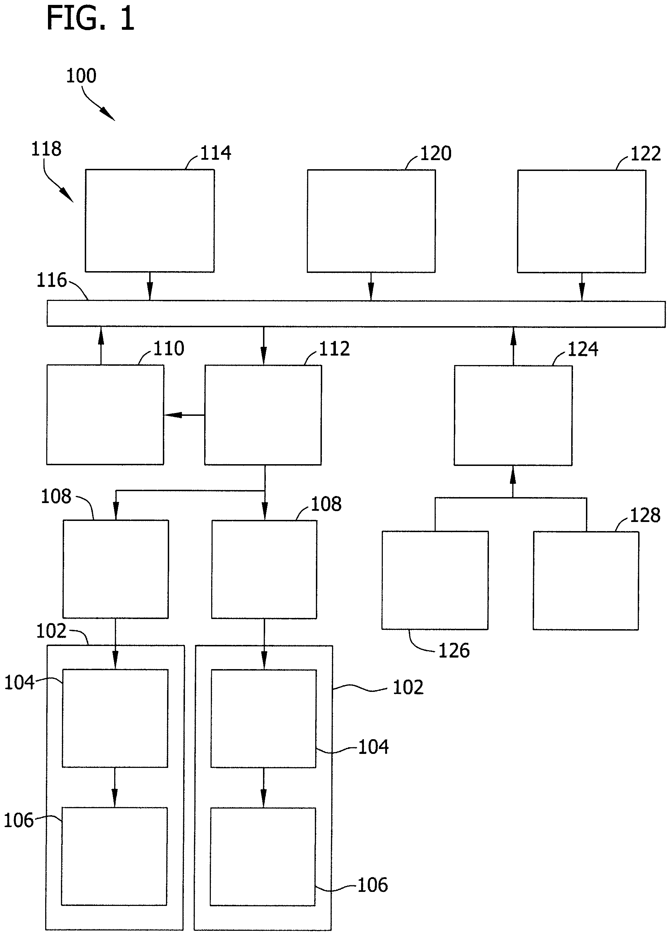

Fig. 1 illustrates an example system 100 that may be used with a utility company (not shown), such as an electric utility company. Moreover, in the example embodiment, the utility company provides energy, such as electricity, to a plurality of locations 102. Alternatively, energy provided by the utility company may include natural gas, propane, and/or any other form of energy and/or product usable for generating energy. Locations 102 may include, but are not limited to only including, a residence, an office building, an industrial facility, and/or any other building or location that receives energy from the utility company. In the example embodiment, system 100 monitors the delivery of energy from the utility company to locations 102.

In the example embodiment, each location 102 includes at least one network device 104 and at least one energy consumer 106 coupled to network device 104. As used herein, the term "couple" is not limited to a direct mechanical and/or electrical connection between components, but may also include an indirect mechanical and/or electrical connection between components. In the example embodiment, network device 104 includes a dashboard, a console, and/or any other device that enables system 100 to function as described herein. Alternatively, network device 104 may be a receiver or a transceiver coupled to or integrated within an associated energy consumer 106. Network device 104 transmits and receives data, such as energy management messages, between energy consumers 106 and one or more systems or components of the utility company. In the example embodiment, energy consumers 106 are devices or systems, such as appliances, machines, lighting systems, security systems, computers, and/or any other load that consumes energy received from the utility.

In the example embodiment, at least one meter 108 is coupled to each network device 104 within or proximate to location 102. Moreover, in the example embodiment, meter 108 is an advanced metering infrastructure (AMI) meter 108 that is coupled to each energy consumer 106 within location 102 via network device 104. In an alternative embodiment, location 102 does not include a network device 104, and AMI meter 108 is coupled directly to energy consumers 106 of location 102. In the example embodiment, AMI meter 108 measures the energy consumed by each energy consumer 106 within location 102 and transmits data representative of the energy consumed (hereinafter referred to as "energy consumption measurements") to a meter monitoring system 110, as described more fully below. Moreover, in the example embodiment, AMI meters 108 are programmed to measure the energy consumed by each energy consumer 106 at a start of a billing cycle and at an end of the billing cycle and to store energy consumption measurements within a memory device (not shown) within each AMI meter 108. The billing cycle may be 30 days, a calendar month, and/or any other time period as desired. Moreover, in the example embodiment, AMI meters 108 are enabled to measure and store energy measurements periodically, such as every hour, every 10 minutes, and/or at any other frequency. AMI meters 108 are also enabled to measure energy consumption upon a request (i.e., "on demand") that is initiated by a system coupled in signal communication with AMI meters 108. In the example embodiment, AMI meters 108 are programmed to automatically transmit the measurements to meter monitoring system 110.

Moreover, a plurality of AMI meters 108, in the example embodiment, are coupled to, and/or are a part of, an AMI system or network 112. Moreover, in the example embodiment, AMI system 112 is coupled to meter monitoring system 110. In the example embodiment, AMI system 112 includes a plurality of data and/or power conduits, such as network and/or power cables, that enable data to be transmitted and received between AMI meters 108 and meter monitoring system 110. Moreover, in the example embodiment, AMI system 112 includes at least one computer, such as a server, and/or at least one router or switch that enables data to be routed to identified destinations.

As used herein, the term "computer" refers to a system that includes at least one processor and at least one memory device. The processor may include any suitable programmable circuit including one or more systems and microcontrollers, microprocessors, reduced instruction set circuits (RISC), application specific integrated circuits (ASIC), programmable logic circuits (PLC), field programmable gate arrays (FPGA), and any other circuit capable of executing the functions described herein. The above represent examples only, and thus are not intended to limit in any way the definition and/or meaning of the term "processor." A computer may include a plurality of processors and/or memory devices, and may be, or may be included within, one or more servers, data centers, and/or any other centralized or distributed computing system. Moreover, in the example embodiment, the memory device includes a computer-readable medium, such as, without limitation, random access memory (RAM), flash memory, a hard disk drive, a solid state drive, a diskette, a flash drive, a compact disc, a digital video disc, and/or any suitable memory that enables the processor to store, retrieve, and/or execute instructions and/or data.

In one embodiment, AMI system 112 may be coupled to at least one legacy meter (not shown) instead of, or in addition to, AMI meter 108. As used herein, the term "legacy" refers to a meter or another device that does not include the capability of remotely communicating with and/or being remotely controlled by another device. In contrast, AMI meters 108, or "smart meters," are enabled to remotely communicate with and/or be remotely controlled by another device or system, such as meter monitoring system 110, a demand response system 114, and/or any other device or system that enables system 100 to function as described herein.

Meter monitoring system 110, in the example embodiment, includes at least one computer that is located at the utility company, such as within a data center (not shown) of the utility company. Alternatively, meter monitoring system 110 is located external to the utility company, and system 110 may be coupled in communication with a computer or other device (not shown) at the utility company. In the example embodiment, meter monitoring system 110 receives energy consumption measurements from AMI meters 108 and stores the energy consumption measurements on one or more data files (not shown) associated with each AMI meter 108.

System 100 also includes demand response system 114, in the example embodiment, that is coupled to meter monitoring system 110 via a system bus 116. In the example embodiment, system bus 116 at least partially forms an intranet or other network within the utility company that enables data to be transmitted and received securely between a plurality of computers 118. In the example embodiment, computers 118 include, or are included within, meter monitoring system 110, demand response system 114, a customer information system 120, and a billing system 122. Alternatively, computers 118 may include, or may be included within, any other system or systems that enable system 100 to function as described herein. In the example embodiment, computers 118 are housed within a data center (not shown) of the utility company. Alternatively, computers 118 may be housed in any other location that enables systems 118 to communicate with each other and with the utility company. Moreover, while computers 118 are described herein as having separate functions, inputs, and/or outputs, it should be recognized that any computer 118 may include the functionality of any other computer 118, and/or may be combined with any other computer 118.

Demand response system 114, in the example embodiment, generates, receives, and/or stores information relating to demand response events and/or demand response requests that may be identified and/or received by the utility company. As used herein, the term "demand response event" refers to a period of time during which one or more demand response requests are generated. As used herein, the term "demand response request" refers to a message and/or a signal transmitted from a system to an energy consumer 106, network device 104, and/or AMI meter 108 for use in reducing and/or halting energy consumption by energy consumer 106. As such, demand response system 114 may cause energy consumers 106 to be deenergized when energy demand exceeds energy production and/or energy transmission capacity by transmitting, or causing to be transmitted, a demand response request to energy consumers 106.

In the example embodiment, demand response system 114 determines when a demand response event will be initiated. Demand response system 114 transmits, or causes to be transmitted, a notification of the demand response event to the customers and/or to agents of the customers who will be affected by the event, such as those customers who are enrolled in a billing plan or program that authorizes demand response requests to be transmitted to one or more energy consumers 102 associated with the customer for use in reducing energy consumption of energy consumers 102 (hereinafter referred to as a "demand response program"). The demand response notification includes, in the example embodiment, a start time for the demand response event, a duration and/or an end time for the demand response event, and a price and/or a price adjustment for energy consumed during the demand response event. Demand response system 114 causes the demand response event notifications to be transmitted to the customers and/or to agents of the customers, and stores the data contained in the notifications in one or more log files and/or other files. Moreover, in the example embodiment, demand response system 114 transmits a demand response pricing signal to billing system 122 and/or to any other computer 118. The demand response pricing signal is representative of the price and/or the price adjustment for energy consumed by energy consumer 106 during the demand response event.

In the example embodiment, demand response system 114 also transmits requests to AMI meters 108 that cause AMI meters 108 to measure energy consumption by energy consumers 106. Such requests, in the example embodiment, are transmitted through meter monitoring system 110 and through AMI system 112 to AMI meters 108. Moreover, in the example embodiment, at least some requests are transmitted on-demand (i.e., not on a predefined schedule), and are timed such that AMI meters 108 measure the energy consumption of energy consumers 106 at the beginning of the demand response event and at the end of the demand response event. In an alternative embodiment, demand response system 114 may transmit the requests at the beginning and end of the demand response events and at the beginning and end of the billing cycle, and/or at any other time, frequency, or schedule.

Customer information system 120, in the example embodiment, is coupled to at least one other computer 118 via system bus 116. In the example embodiment, customer information system 120 includes a database (not shown) and/or any other data structure that stores information relating to utility customers. The information includes, but is not limited to only including, the customer name, the residential address, email address, billing address, and/or any other contact information for the customer, the billing program that the customer is subscribed to, and/or any other information that enables system 100 to function as described herein. In the example embodiment, at least a portion of the customers listed within customer information system 120 are subscribed to a demand response program. Alternatively, any number of customers are subscribed to the demand response program, and/or any other billing program that enables system 100 to function as described herein.

In the example embodiment, billing system 122 stores pricing rates and other terms and conditions for each customer's billing program, such as for the demand response program. Alternatively, the pricing rates and/or other terms of the billing program may be stored in customer information system, and signals representative of the pricing rates and/or the other billing program terms may be transmitted to billing system 122. Moreover, in the example embodiment, billing system 122 receives at least one pricing signal or pricing data from demand response system 114. More specifically, in the example embodiment, billing system 122 receives a pricing signal or pricing data representative of a price of electricity consumed by each customer during a demand response event (hereinafter referred to as a "demand response pricing signal"). Alternatively, billing system 122 receives a pricing signal or pricing data representative of a price adjustment that changes the price of electricity consumed by each customer during the demand response event. The price adjustment may include a price increase with respect to a base rate or a price decrease with respect to the base rate. In the example embodiment, billing system 122 also receives energy consumption measurements from meter monitoring system 110. The measurements include the amount of energy consumed during a billing cycle and/or during one or more periods defined within the billing cycle, such as during one or more demand response events. Based on the measurements received, billing system 122 generates a utility bill for each customer. Billing system 122 transmits the bill, or causes the bill to be transmitted, to each customer and/or to an agent of each customer. In one embodiment, billing system 122 transmits data representative of the bill to a communication system (not shown) that transmits the data to each customer via mail, via email, via a public switched telephone network (not shown), via a webpage, and/or via any other communication medium that enables system 100 to function as described herein.

Moreover, in the example embodiment, a supervisory control and data acquisition (SCADA) system 124 is coupled to system bus 116. In the example embodiment, SCADA system 124 is or includes a computer 118. SCADA system 124 controls an operation of a plurality of energy distribution network components (not shown) that may include, but are not limited to only including, at least one substation, feeder, transformer (none shown in Fig. 1), and/or any other component that enables SCADA system 124 to function as described herein. SCADA system 124 is coupled to a plurality of sensors 126, such as current sensors, voltage sensors, and/or any other sensor, that measure operating characteristics of the energy distribution components and/or operating characteristics of the energy distribution network. Moreover, SCADA system 124 is coupled to a plurality of control devices 128, such as circuit breakers, voltage regulators, capacitor banks, and/or any other device that enables SCADA system 124 to control and/or adjust the operational characteristics of the energy distribution network and/or the energy distribution network components. In the example embodiment, SCADA system 124 is enabled to communicate with sensors 126 and control devices 128 to control the energy distribution network components using closed loop feedback.

In the example embodiment, SCADA system 124 includes a software-based model or representation of the energy distribution network (hereinafter referred to as a "network model") stored within a memory device (not shown). Alternatively, the network model is stored within any other computer 118 that enables system 100 to function as described herein, such as, without limitation, within demand response system 114 and/or customer information system 120. In the example embodiment, the network model enables SCADA system 124 to identify the topology and/or the interconnections of the energy distribution network components for use in controlling and/or monitoring the components.

During operation, in the example embodiment, AMI meters 108 for each customer and/or location 102 transmit energy consumption measurements for each customer at the beginning of the billing cycle and at the end of the billing cycle. If a shortage of energy transmission and/or energy generation capability occurs or is anticipated to occur, demand response system 114 prepares to issue a demand response event and identifies a plurality of customers that are subscribed to the demand response program. The customers may be identified using data from customer information system 120 and/or any other computer 118, including demand response system 114, that enables system 100 to function as described herein. Demand response system 114 identifies a start time, a duration and/or an end time, and a price and/or price adjustment for the demand response event. Demand response system 114 causes a notification of the demand response event to be transmitted to each agent and/or customer. Each AMI meter 108 associated with each customer may transmit at least one energy consumption measurement at the start of the demand response event (i.e., once the start time is reached) and at the end of the demand response event (i.e., once the end time is reached or the duration has elapsed) to meter monitoring system 110. In the example embodiment, demand response system 114 transmits one or more measurement requests to AMI meters 108 at the start time and at the end time of the demand response event, and AMI meters transmit the respective energy consumption measurements to meter monitoring system 110 in response to the requests. Alternatively, AMI meters 108 receive the demand response event notifications and/or demand response requests and are programmed by the notifications and/or requests to automatically transmit the energy consumption measurements to meter monitoring system 110 once the start time and/or the end time is reached.

Meter monitoring system 110, in the example embodiment, receives the energy consumption measurements and transmits the energy consumption measurements to billing system 122. In one embodiment, demand response system 114 transmits a demand response pricing signal to billing system 122 to enable billing system 122 to determine the price for energy consumed during the demand response event. Moreover, in the example embodiment, billing system 122 references data stored within billing system 122 to determine a price (hereinafter referred to as a "base pricing rate") for energy consumed during the billing cycle or for energy consumed during a time period other than the demand response event. Billing system 122 generates a bill for the energy consumed during the billing cycle using a billing algorithm (not shown in Fig. 1) stored within billing system 122. In the example embodiment, billing system 122 transmits the bill to the customer and/or causes the bill to be transmitted to the customer and/or to the agent of the customer.

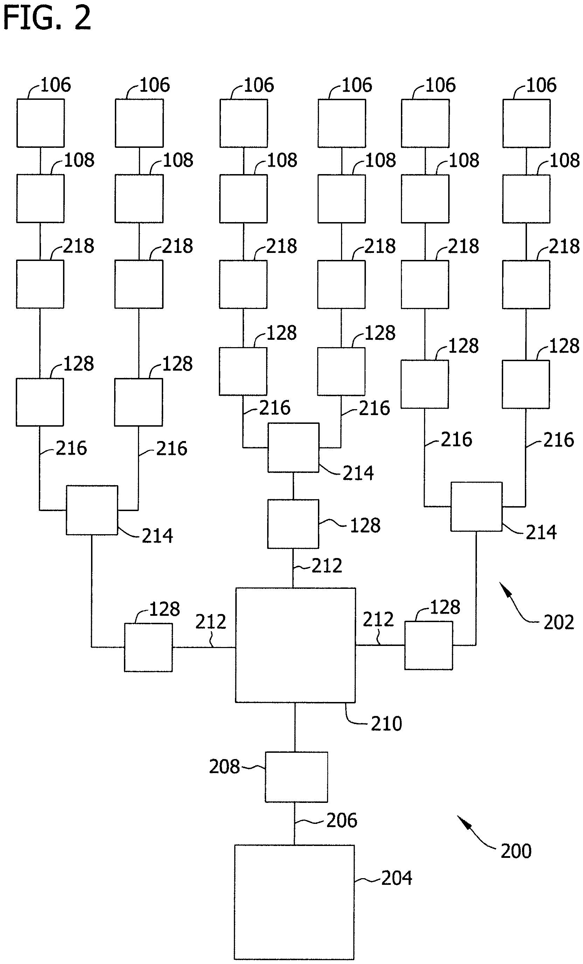

Fig. 2 is a schematic diagram of a portion of an example energy distribution network 200 that may be used with system 100 (shown in Fig. 1). More specifically, Fig. 2 is a logical representation of a portion of energy distribution network 200 that illustrates a plurality of components 202 within energy distribution network 200 and interconnections between components 202. In the example embodiment, components 202 include one or more of a utility company 204, a transmission line 206, a distribution transformer 208, a substation 210, a substation bus 212, a control device 128, a feeder 214, a feeder segment 216, a pole transformer 218, an AMI meter 108, and/or an energy consumer 106. Moreover, at least one sensor 126 (shown in Fig. 1) may be coupled to or positioned within at least one component 202.

In the example embodiment, utility company 204 generates energy, such as electrical energy, from at least one generator (not shown). Moreover, in the example embodiment, utility company 204 transmits high voltage energy to at least one distribution transformer 208 to reduce the voltage to a level that is appropriate for transmission. The energy is transmitted through at least one transmission line 206 to a substation 210. In the example embodiment, a plurality of substations 210, transmission lines 206, and/or distribution transformers 208 are included within energy distribution network 200 and are coupled to utility company 204.

Substation 210, in the example embodiment, adjusts the voltage, current, phase, and/or any other characteristic of the energy and transmits the energy through at least one substation bus 212. In the example embodiment, substation 210 includes a plurality of substation busses 212, and at least one control device 128 is coupled to each substation bus 212.

In the example embodiment, a plurality of feeders 214 are coupled to substation busses 212 such that at least one feeder 214 is coupled to each substation bus 212. Each feeder 214 includes at least one feeder segment 216 that transmits energy from substation bus 212 and/or feeder 214 to at least one pole transformer 218. Moreover, in the example embodiment, at least one control device 128 is coupled to each feeder segment 216. Alternatively, one or more feeder segments 216 may not include control devices 128.

In the example embodiment, pole transformers 218 reduce the voltage of the energy and transmit the energy to each energy consumer 106 within a location 102 associated with transformer 218. AMI meters 108 monitor the electricity consumed by energy consumers 106 and transmit energy consumption measurements to utility company 204, such as to meter monitoring system 110 and/or to another computer 118 (both shown in Fig. 1).

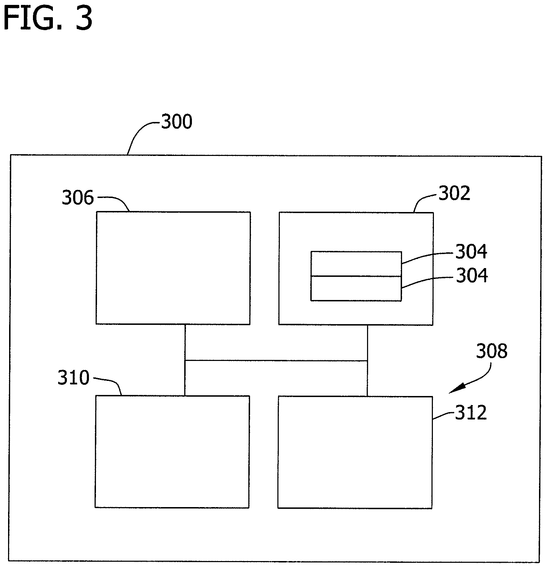

Fig. 3 is a block diagram of an example network model 300 that may be used with system 100 (shown in Fig. 1) and/or with energy distribution network 200 (shown in Fig. 2). Network model 300, in the example embodiment, is embodied within a memory device of a computer 118, such as within SCADA system 124 (both shown in Fig. 1), and is executed by a processor of SCADA system 124 and/or another computer 118.

In the example embodiment, network model 300 includes a database 302 of information regarding each component 202 within energy distribution network 200 (both shown in Fig. 2). Alternatively, network model 300 may include any other data structure in addition to or other than a database 302 that enables model 300 to function as described herein. In the example embodiment, database 302 includes a plurality of records 304, and at least one record 304 is associated with each component 202.

Each record 304, in the example embodiment, includes one or more data files stored within the memory device. Moreover, in the example embodiment, the record 304 for each component 202 includes a physical location of component 202 (e.g., a physical or geographical address of component 202), a logical location of component 202 (e.g., a relationship with other components 202 within energy distribution network 200, such as the other components 202 that the present component 202 is coupled to within energy distribution network 200), information identifying the owner or owners of component 202 and/or the party or parties responsible for maintenance and/or payment of energy supplied to component 202, a transmission capacity and/or a consumption history of component 202, an identification number or information for component 202 (e.g., a serial number or a network address of component 202), and/or any other information that enables network model 300 to function as described herein.

Moreover, in the example embodiment, network model 300 receives information 306 regarding customers of utility company 204 (shown in Fig. 3) (hereinafter referred to as "customer information") from customer information system 120 (shown in Fig. 1), from demand response system 114, and/or any other computer 118. Customer information 306 may include, but is not limited to only including, the customer name, the customer address and/or the address of location 102 that the customer owns and/or is responsible for, the billing plan or program the customer is subscribed to, a list of the energy consumers 106 associated with the customer and/or that the customer owns and/or is responsible for, the energy consumption history of each energy consumer 106 associated with the customer, and/or a list of AMI meters 108 associated with the customer's energy consumers 106 and/or location 102. Moreover, in the example embodiment, network model 300 associates customer information 306 with records 304 such that customer information 306 is linked with records 304.

In the example embodiment, network model 300 updates records 304 during operation of system 100 and/or during operation of energy distribution network 200. For example, the transmission capacity and/or the consumption history of components 202 is updated based on the energy distributed through energy distribution network 200 and/or system 100. Moreover, network model 300 receives updated customer information 306 from customer information system 120, demand response system 114, and/or from another computer 118 during operation of system 100 and/or energy distribution network 200.

Network model 300, in the example embodiment, organizes customer information 306 and data from records 304 within one or more displays 308 that may be viewed on a display device (not shown). More specifically, in the example embodiment, network model 300 presents customer information 306 and the data from records 304 in a schematic display 310 and a geographical display 312. Schematic display 310 is a logical representation of energy distribution network 200 that includes customer information 306 and/or the data from records 304. More specifically, schematic display 310 illustrates the topological layout of energy distribution network 200, such as the arrangement of components 202 and/or the connections between components 202. In one embodiment, an address of each energy consumer 106 and a billing plan or program for each customer associated with each energy consumer 106 are also displayed within schematic display 310. Additionally or alternatively, any other information or data may be displayed on schematic display 310. In the example embodiment, geographical display 312 is a physical representation of energy distribution network 200 that includes customer information 306 and/or the data from records 304. More specifically, geographical display 312 illustrates a geographical and/or a physical location of energy distribution network 200, such as the geographical location of components 202. In one embodiment, geographical display 312 is a map view of energy distribution network 200 and components 202.

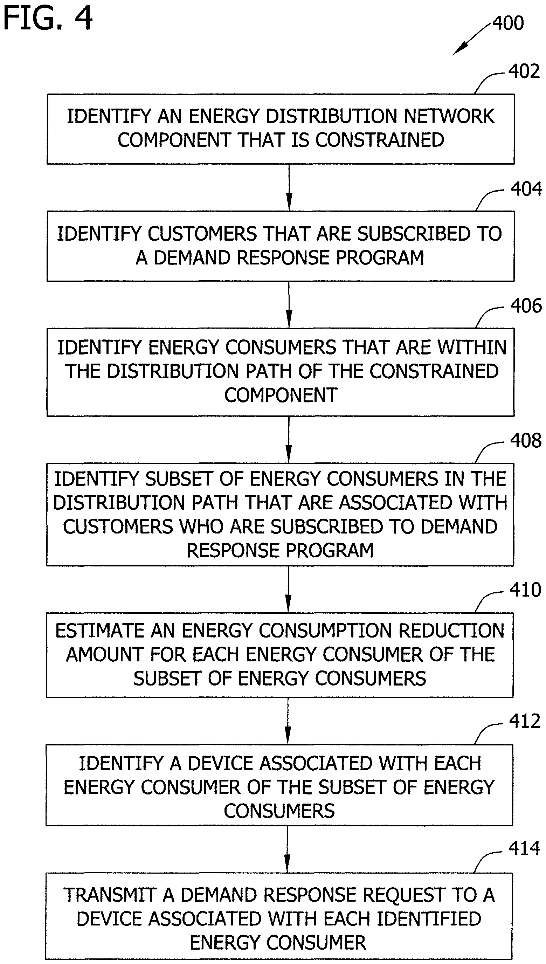

Fig. 4 is a flow diagram of an example method 400 for managing an energy distribution network that may be used with system 100 (shown in Fig. 1) and/or energy distribution network 200 (shown in Fig. 2). In the example embodiment, demand response system 114 (shown in Fig. 1) receives data from network model 300, such as records 304, customer information 306 (shown in Fig. 3), and/or other data. Demand response system 114, in the example embodiment, uses customer information 306 and/or data from records 304 to alleviate one or more energy transmission and/or energy generation constraints associated with one or more demand response events. More specifically, in the example embodiment, demand response system 114 receives data from network model 300 and/or SCADA system 124 (shown in Fig. 1) identifying 402 an energy distribution constraint within energy distribution network 200, i.e., a component 202 of energy distribution network 200 that is constrained. The constrained component 202 may be identified 402 using sensors 126 (shown in Fig. 1) and/or any other device that measures and/or monitors components 202 and/or energy distribution network 200. As used herein, the term "constrained" or "constraint" refers to a component 202 that is unable to distribute sufficient energy to satisfy a requested amount of energy, such as an amount of energy requested by one or more energy consumers 106.

Demand response system 114 and/or any other system identifies 404 customers of utility company 204 (shown in Fig. 2) that are subscribed to a demand response program. In the example embodiment, demand response system 114 receives data from network model 300 and/or from any other component within system 100 and/or energy distribution network 200 that identifies 406 one or more energy consumers 106 that are in the distribution path downstream from the constrained component 202. As used herein, the term "distribution path" refers to a plurality of components 202 that are coupled together in a chain from utility company 204 to an energy consumer 106 such that energy is channeled through components 202 from utility company 204 to energy consumer 106. As used herein, the term "downstream" refers to a direction of energy transmission from utility company 204 towards energy consumers 106. As such, energy consumers 106 that are electrically coupled to component 202, and/or energy consumers 106 that receive energy from component 202, are identified 406 by demand response system 114.

Moreover, in the example embodiment, demand response system 114 uses data from network model 300 (e.g., customer information 306 and/or data from records 304) to identify 408 a subset of the energy consumers 106 positioned in the distribution path of the constrained component 202 that are also associated with customers who are subscribed to a demand response program. In the example embodiment, demand response system 114 and/or another computer 118 (shown in Fig. 1) estimates 410 an energy consumption reduction amount that each energy consumer 106 of the subset of energy consumers 106 is enabled to implement based on a demand response request. In one embodiment, the estimated 410 energy consumption reduction amount is based on historical energy consumption measurements and/or responses to prior demand response requests. Alternatively, the estimated 410 energy consumption reduction amount may be based on any other data and/or calculation that enables method 400 to function as described herein.

In the example embodiment, demand response system 114 uses data from network model 300 and/or data stored in demand response system 114 and/or any other system to identify 412 a device, such as a network device 104, that is associated with each identified 408 energy consumer 106 of the subset of energy consumers 106. The identified 412 device is enabled to receive demand response requests and is enabled to implement the demand response requests on the associated energy consumer 106 and/or transmit the demand response requests to the associated energy consumer 106. Moreover, in the example embodiment, demand response system 114 transmits 414, or causes to be transmitted, at least one demand response request to the device associated with each identified 408 energy consumer 106 of the subset of energy consumers 106. In the example embodiment, each demand response request identifies an energy consumption reduction amount that energy consumers 106 are directed to implement. In one embodiment, each demand response request is unique to each energy consumer 106, and each request includes a desired energy consumption reduction that each energy consumer 106 is directed to implement. The desired energy consumption reduction may be the estimated 410 energy consumption reduction, or may be any other amount that enables method 400 to function as described herein. In the example embodiment, the transmitted 414 demand response request causes each energy consumer 106 to reduce energy consumption by the amount identified within the request. As such, method 400 facilitates reducing energy consumed by energy consumers 106 within the distribution path of a constrained component 202, thus facilitating reducing one or more energy distribution network constraints.

The example embodiments described herein provide a robust and efficient system for managing an energy distribution network. A network model includes a topological layout and a geographical layout of the components of the energy distribution network. The system uses the network model to identify a constrained component of the energy distribution network that is unable to distribute a requested amount of energy to an energy consumer. The system identifies the customers that are subscribed to a demand response program, and identifies the energy consumers that are within a distribution path of the constrained component. Moreover, the system identifies the customers that are associated with the energy consumers in the distribution path, and selects the identified customers that are also subscribed to the demand response program. The system transmits a demand response request to a device associated with the selected customers to reduce energy consumption within the distribution path of the constrained component. Accordingly, the system described herein enables demand response requests to be targeted to energy consumers that are affected by, and/or that determine an amount of energy requested from, a constrained energy distribution network component. As such, energy consumers that are not affected by the constrained component may continue to operate normally (i.e., such energy consumers may not receive a demand response request).

A technical advantage of the systems and method described herein includes at least one of (a) identifying a plurality of energy consumers associated with an energy distribution network constraint; (b) identifying a plurality of customers subscribed to a demand response program; (c) identifying a subset of energy consumers of a plurality of energy consumers that are associated with a plurality of customers; (d) identifying a device associated with each energy consumer of a subset of energy consumers; and (e) transmitting a demand response request to at least one identified device.

Example embodiments of systems and methods for use in managing an energy distribution network are described above in detail. The systems and methods are not limited to the specific embodiments described herein, but rather, components of the systems and/or steps of the methods may be utilized independently and separately from other components and/or steps described herein. For example, the methods described herein may also be used in combination with other energy systems and methods, and are not limited to practice with only the system as described herein. Rather, the example embodiment can be implemented and utilized in connection with many other utility and/or energy applications.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defmed by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (100), comprising:
a first computer (118) comprising an energy distribution network model (300), said first computer identifying a plurality of energy consumers (106) associated with an energy distribution constraint within the energy distribution network (200); and
a second computer coupled to said first computer and configured to:
receive data from said first computer (118);
identify a plurality of customers subscribed to a demand response program;
identify a subset of the plurality of energy consumers (106) that are associated with the plurality of customers;
identify a device (104) associated with each energy consumer (106) of the subset of energy consumers; and
cause a demand response request to be transmitted to at least one identified device (104).

2. A system (100) in accordance with claim 1, wherein said model (300) associates customer information of the plurality of customers with topological information of the energy distribution network (200).

3. A system (100) in accordance with claim 1, wherein said first computer (118) identifies a component (202) of the energy distribution network (200) that is unable to distribute a requested amount of energy to an energy consumer (106) of the plurality of energy consumers.

4. A system (100) in accordance with claim 3, wherein said second computer (118) receives data from said model (300) identifying a plurality of energy consumers (106) that are positioned within a distribution path of the identified component (202).

5. A system (100) in accordance with claim 1, wherein said second computer (118) estimates an energy consumption reduction amount that an energy consumer (106) of the subset of energy consumers is enabled to implement.

6. A system (100) in accordance with claim 5, wherein said second computer (118) identifies a device (104) associated with the energy consumer (106) of the subset of energy consumers, the device is enabled to receive a demand response request.

7. A system (100) in accordance with claim 6, wherein said second computer (118) transmits a demand response request to the device (104), the demand response request including a request to reduce energy consumption by the estimated energy consumption reduction amount.

8. A demand response system comprising:
a processor configured to:
receive data from an energy distribution network model (300), the data identifying a plurality of energy consumers (106) associated with an energy distribution constraint within the energy distribution network (200);
identify a plurality of customers (106) subscribed to a demand response program;
identify a subset of the plurality of energy consumers that are associated with the plurality of customers (106);
identify a device (104) associated with each energy consumer of the subset of energy consumers; and
cause a demand response request to be transmitted to at least one identified device (104).

9. A demand system in accordance with claim 8, wherein said processor is configured to receive data identifying a component of the energy distribution network that is unable to distribute a requested amount of energy to an energy consumer of the plurality of energy consumers, and wherein said processor is preferably further configured to receive data from the model (300) identifying a plurality of energy consumers (100) that are positioned within a distribution path of the identified component.

10. A demand response system in accordance with claim 8 or claim 9, wherein said processor is further configured to estimate an energy consumption reduction amount that an energy consumer of the subset of energy consumers is enabled to implement.

11. A demand response system in accordance with claim 10, wherein said processor is further configured to identify a device (104) associated with the energy consumer of the subset of energy consumers, wherein the device is enabled to receive a demand response request.

12. A demand response system in accordance with claim 11, wherein said processor is further configured to transmit a demand response request to the device (104), the demand response request including a request to reduce energy consumption by the estimated energy consumption reduction amount.

13. A method (400) for managing an energy distribution network (200) that distributes energy to a plurality of energy consumers (106), said method comprising:
identifying a plurality of energy consumers associated with an energy distribution network constraint;
identifying a plurality of customers subscribed to a demand response program;
identifying a subset of the plurality of energy consumers that are associated with the plurality of customers;
identifying a device (104) associated with each energy consumer of the subset of energy consumers; and
transmitting a demand response request to at least one identified device.

14. A method (400) in accordance with claim 13, further comprising associating customer information of the plurality of customers with topological information of the energy distribution network (200).

15. A method (400) in accordance with claim 13 or claim 14, further comprising identifying a component (202) of the energy distribution network (200) that is unable to distribute a requested amount of energy to an energy consumer (106) of the plurality of energy consumers.
